# EUROPEAN PATENT APPLICATION

(11) **EP 4 342 302 A2**
(43) Date of publication of application: **27.03.2024**
(21) Application number: 24156935.9
(22) Date of filing: 28.09.2017
(51) Int. Cl.: A23G 3/34

(54) **LEGUME-COATED FOOD PRODUCTS**

(30) Priority: 03.10.2016 US 201662403484 P
(62) Divisional of application: 17858925.5
(71) Applicant: MARS INCORPORATED, McLean, VA 22101 (US)
(72) Inventor: DOMBROSKI, Amy Marie, Hackettstown, 07840 (US); VEGA-MORALES, Cesar, 3261 Oud-Beijerland (NL); STORAH, Leigh Samuel, Berkshire, SL1 1LG (GB)
(74) Representative: Haseltine Lake Kempner LLP

(57) **Abstract**

A chocolate composition product that includes an outer shell having a legume flour and a hydrophilic binding agent, and an inner portion that includes a chocolate composition. In embodiments, the outer shell surrounds the inner portion, the product is a ready-to-eat food, and the average moisture content of the outer shell is between 0.1% and 5%.

## Description

### RELATED APPLICATION

This application claims the priority of U.S. provisional application Ser. No. U.S.S.N. 62/403,484, entitled "LEGUME-COATED FOOD PRODUCTS," filed October 3, 2016.

### TECHNICAL FIELD

The present invention relates to legume-based food products.

### BACKGROUND OF INVENTION

Where the inner portion of a food product is a fat-based confection such as chocolate, fat-based confections tend to have melting points near 37 degrees Celsius and below, and much of the desirable eating experience of, say, chocolate confectionery is related to its ability to melt quickly and completely to provide the consumer thereof with a lubricious, indulgent eating experience. This ability, in turn, is often directly relatable to the use of cocoa butter as at least a portion of the fat component in the confection. With a sharp melting point very near 37 degrees Celsius, cocoa butter provides the desirable melting profile upon ingestion, and thus, a large component of the desired overall consuming experience.

However, what is a desirable trait from a consumer's perspective is not necessary a positive attribute from a manufacturing, shipping and/or handling perspective. For example, the ability of chocolate confections to melt quickly and completely at 37 degrees Celsius can become a product storage and quality concern, in particular in geographies where the environmental temperature averages at or above 37 degrees Celsius. These concerns may be exacerbated in regions where economic circumstances are not conducive to the wide spread use of refrigerated storage. It would thus be desirable to provide heat tolerant products that provide the desired organoleptic experience, that are yet capable of avoiding the messiness associated with, say, chocolate that has melted either in the consumer's hands, or in the packaging.

### BRIEF SUMMARY OF INVENTION

In embodiments, the present invention is a product comprising: an outer shell; and an inner portion; wherein the outer shell comprises a legume flour; wherein the inner portion comprises a chocolate composition; wherein the outer shell surrounds the inner portion; wherein the product is a ready-to-eat food; wherein an average moisture content of the outer shell is between 0.1 wt% and 5 wt%; and wherein, when the product is tested by exposing the product to 37 degrees Celsius for 3 minutes, the product exhibits no visible leakage.

In one or more embodiments detailed herein, the inner portion further comprises a legume.

In one or more embodiments detailed herein, the outer shell further comprises at least one of a cinnamon flavoring, a vanilla flavoring, or a cocoa flavoring.

In one or more embodiments detailed herein, the outer shell further comprises a rice starch.

In one or more embodiments detailed herein, the legume is coated with or enclosed in the chocolate composition.

In one or more embodiments detailed herein, the legume comprises peanut, chick pea, soybean, green pea, yellow pea, black eyed peas, pinto bean, kidney bean, black bean, mung, adzuki, fava, green lentil, red lentil, black lentil or combinations thereof.

In one or more embodiments detailed herein, the legume is a peanut.

In one or more embodiments detailed herein, the legume is at least one of a whole legume or a fragment of a legume.

In one or more embodiments detailed herein, the legume flour is a flour of chick pea, peanut, soybean, green pea, yellow pea, black eyed peas, pinto bean, kidney bean, black bean, mung, adzuki, fava, green lentil, red lentil, black lentil or combinations thereof.

In one or more embodiments detailed herein, the binding agent comprises pregelatinized starch, molasses, jaggery, rice syrup, brown rice syrup, corn syrup, alginates, agar, guar gum, locust bean, carrageenan, gum arabic, tragacanth, pectin, xanthan, gellan, maltodextrin, galactomannan, pullulan, laminarin, scleroglucan, gum arabic, inulin, pectin, chitin, cyclodextrin, chitosan, polyvinyl pyrrolidone, methylcellulose, hydroxypropylcellulose, hydroxypropylmethylcellulose, or a mixture thereof.

In one or more embodiments detailed herein, the binding agent comprises inulin or brown rice syrup.

In one or more embodiments detailed herein, the outer shell comprises between 30% and 60%, and the inner portion comprises between 40% and 70%, based on the total weight of the product.

In one or more embodiments detailed herein, the chocolate composition comprises a chocolate or a compound chocolate.

In one or more embodiments detailed herein, the outer shell has a thickness between 0.8 to 4 mm.

In one or more embodiments detailed herein, the product is heat tolerant as measured by detecting no leakage when the product is exposed to a temperature of 37°C for 3 minutes.

In one or more embodiments detailed herein, the present invention is a method comprising: combining a legume flour and a starch to form a dry mix; combining a syrup and water, and optionally flavors, to form a wet mix; coating a chocolate composition with the wet mix to form a first layer; coating the first layer with the dry mix to form a second layer; repeating the first layer coating step and the second layer coating step to form a multilayered outer shell on the inner portion to form a coated product; and heating the coated product to reduce moisture content of the outer shell and cohesively bind the applied layers; wherein the outer shell comprises 5 to 20 alternating layers of the wet mix and the dry mix; and wherein the coated product exhibits no significant visible leakage during the heating step.

In one or more embodiments detailed herein, the method further comprises: the outer shell comprising alternating layers of the wet mix and the dry mix.

In one or more embodiments detailed herein, the dry mix further comprises at least one of cocoa powder and baking soda.

In one or more embodiments detailed herein, the outer shell has a thickness between 0.8 to 4 mm.

In one or more embodiments detailed herein, the chocolate composition comprises a chocolate or compound chocolate.

In one or more embodiments detailed herein, the heating step comprises exposing the coated product to a temperature between 175 to 200°C for 2 to 20 minutes.

### BRIEF DESCRIPTION OF THE DRAWINGS

Embodiments of the present invention, briefly summarized above and discussed in greater detail below, can be understood by reference to the illustrative embodiments of the invention depicted in the appended drawings. It is to be noted, however, that the appended drawings illustrate only typical embodiments of this invention and are therefore not to be considered limiting of its scope, for the invention may admit to other equally effective embodiments.
Figure 1 depicts a non-limiting embodiment of the product of the present invention.
Figure 2 depicts a non-limiting embodiment of the product of the present invention.
Figure 3 depicts a non-limiting embodiment of the product of the present invention.
Figure 4 depicts a non-limiting embodiment of the method of the present invention.
Figure 5 depicts a non-limiting embodiment of the method of the present invention.

To facilitate understanding, identical reference numerals have been used, where possible, to designate identical elements that are common to the figures. The figures are not drawn to scale and may be simplified for clarity. It is contemplated that elements and features of one embodiment may be beneficially incorporated in other embodiments without further recitation.

### DETAILED DESCRIPTION

The present invention will be further explained with reference to the attached drawings, wherein like structures are referred to by like numerals throughout the several views. The drawings shown are not necessarily to scale, with emphasis instead generally being placed upon illustrating the principles of the present invention. Further, some features may be exaggerated to show details of particular components.

The figures constitute a part of this specification and include illustrative embodiments of the present invention and illustrate various objects and features thereof. Further, the figures are not necessarily to scale, some features may be exaggerated to show details of particular components. In addition, any measurements, specifications and the like shown in the figures are intended to be illustrative, and not restrictive. Therefore, specific structural and functional details disclosed herein are not to be interpreted as limiting, but merely as a representative basis for teaching one skilled in the art to variously employ the present invention.

Among those benefits and improvements that have been disclosed, other objects and advantages of this invention will become apparent from the following description taken in conjunction with the accompanying figures. Detailed embodiments of the present invention are disclosed herein; however, it is to be understood that the disclosed embodiments are merely illustrative of the invention that may be embodied in various forms. In addition, each of the examples given in connection with the various embodiments of the invention which are intended to be illustrative, and not restrictive.

Throughout the specification, the following terms take the meanings explicitly associated herein, unless the context clearly dictates otherwise. The phrases "in one embodiment" and "in some embodiments" as used herein do not necessarily refer to the same embodiment(s), though it may. Furthermore, the phrases "in another embodiment" and "in some other embodiments" as used herein do not necessarily refer to a different embodiment, although it may. Thus, as described below, various embodiments of the invention may be readily combined, without departing from the scope or spirit of the invention. Further, when a particular feature, structure, or characteristic is described in connection with an implementation, it is submitted that it is within the knowledge of one skilled in the art to effect such feature, structure, or characteristic in connection with other implementations whether or not explicitly described herein.

The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "substantially" means less than 5%.

As used herein, the term "organoleptic properties" includes the flavor display, texture, and sound of a food that are experienced by the eater of said food when said food is eaten.

As used herein, the term "single serving" means any quantity of food sold, marketed, described, advertised, or implied to be equivalent to a single serving size or unit. For example, in the U.S., single serving sizes for foods are defined in the FDA Labeling Rules as contained in 21 CFR § 101.12.

As used herein, the term "shelf stable" refers to foods as microbiologically shelf-stable at 65 degrees to 89 degrees F (19 to 29 degrees C), under normal atmospheric conditions. As used herein, "shelf life" refers to a duration of time in which the foods remain shelf stable. As used herein, the term "shelf life" is calculated based on the change in organoleptic properties of a food or drink in barrier packaging over time. In embodiments, the shelf-life will be determined based, at least in part, on lack of rancidity notes and texture (e.g., crunchiness) of the outer shell.

Staling of products is well recognized in the industry as a major issue. The shelf stable edible snack is essentially free of staling for at least 2 months, at least 6 months, and at least 9 months. The degree of staling is determined by performing a degree of difference test using a trained sensory panel. A scale from 1 to 6 is used. Products rated a 1 are said to be identical to product initially made. A rating of 3 indicates that there is a perceivable difference A rating of 4 or more indicates a strong difference. In one embodiment, the shelf stable edible snack is a bite sized snack. The term "bite sized" is used herein to denote products that resemble and/or are similar to normal sized products, but are sized so that the whole product or most of "the product can be conveniently placed inside a consumer's mouth". Bite sized products often tend to be about 1 to about 6 cm in length. Bite sized products can be loose or fused together while housed in the packaging, or, alternatively, individually wrapped.

To extend the shelf life of the shelf stable edible snack, in an embodiment of the present invention, the product is packaged using a packaging step. The packaging step may involve nitrogen flushing to purge gases from the package. In addition, the package itself may be designed using high oxygen and/or high moisture barrier materials. For example, a multilayer structure providing high moisture and guaranteed oxygen barrier properties and/or a lamination with good hot tack and excellent sealing through particulate matter may be used. In another embodiment, the product is not packaged in a moisture-proof packaging. In some embodiments, product can be either packaged singularly or in a plurality (e.g., but not limited to, 5, 10, 15, 20, 25 pieces of the product).

As used herein, the term "fat" refers to the total amount of digestible, partially digestible and nondigestible fats or oils that are present in the embodiments of the present invention. As used herein, the terms "lipid", "fat" and "oil" are synonymous.

As used herein, the term "carbohydrate" refers to the total amount of sugar alcohols, monosaccharides, disaccharides, oligosaccharides, digestible, partially digestible and non-digestible polysaccharides; and lignin or lignin like materials that are present in the embodiments of the present invention.

As used herein, the term "ready-to-eat" when used to describe a food, means that after manufacture and packaging, the food product requires no additional processing, including but not limited to cooking, baking, microwaving, boiling, frying; or combination with components outside of the product's packaging to achieve the novel combination of balanced nutrition and taste that Applicants are claiming. However, this does not rule out that one or all of the parameters of Applicants' invention, for example, balanced nutrition, convenience and taste, may be improved when said compositions are processed further or combined with other foods. Non-limiting examples of a "ready-to-eat" food is a roasted legume or roasted legume seed.

As used herein, the term "crispy" is used interchangeably with the term "crunchy". In embodiments, a product is determined to be crispy by texture measurements using an Instron texture analyzer or equivalent. In other embodiments, a product is determined to be crispy based on organoleptic properties and/or mouthfeel. In some embodiments, the cocoa-containing center has a creamy texture. In some embodiments, the cocoa-containing center has a crispy texture. In some embodiments, the crispy texture can be measured by assessing water activity (Aw), which may readily be determined using Aw measuring instruments such as a "HYGROSKOP DT" available from Rotronic Instrument Corp., Huntington, N.Y. In some embodiments, a crispy texture will have an Aw greater than about 0.30. In some embodiments, a crispy texture will have an Aw of about 0.31 to about 0.46. In some embodiments, the crispy texture will have an Aw from about 0.33 to about 0.40.

As used herein, the term "surround" or "surrounded" or "surrounding" refers to covering an inner portion with another layer, e.g., an outer shell, such that at least a section of the inner portion is not visible to the naked eye. Surrounding an inner portion can be performed by using known methods such as panning, enrobing, or the methods described in WO2004/016103 and WO2004/016116 which include applying alternating wet layers and dry layers at various ratios. Surrounded products, for example, can be produced having more uniform coating, where the coating layer (e.g., an outer shell) around the inner portion of the surrounded inner layer has an average thickness of 1300-1500 microns and a variation in thickness of at least 500 microns.

As used herein, the term "chocolate lentil" refers to a lentil-shaped portion of chocolate or a cocoa-containing composition. A lentil-shaped portion of chocolate or a cocoa-containing composition is typically a rounded shape.

In some embodiments, the inner portion may be a fat-based confection, and in some of these, the inner portion may be a chocolate composition. In some embodiments, the chocolate composition inner portion comprises chocolate. As used herein, the term "chocolate composition" refers to all chocolate or compound chocolate with a fat phase or fat-like composition such that the composition can be processed according to the methods and with the apparatus described herein. The term refers, for example, to chocolate compositions that conform to the U.S. Standards Of Identity ("SOI chocolate"), and compound chocolate compositions that do not conform to the U.S. Standards Of Identity ("non-SOI chocolate"). The standards of identity for different kinds of chocolate are found in Title 21, Part 163 of the Code of Federal Regulations. "Pure CA 02842595 2014-02-10 SOT chocolate," as that term is used herein, is chocolate that meets the Standards Of Identity for chocolate. Non-SOI compound chocolates include those in which at least one of the standard ingredients of chocolate (i.e., one or more of the nutritive carbohydrate sweetener, the cocoa butter, and the milk fat) are replaced partially or completely, those in which components that have flavors that imitate milk, butter, or chocolate are added, and those in which other additions or deletions in the formulation are made that are outside FDA standards of identity of chocolate. As used herein, the term "chocolate" includes dark chocolate, baking chocolate, milk chocolate, sweet chocolate, semi-sweet chocolate, buttermilk chocolate, skim milk chocolate, mixed dairy product chocolate, low fat chocolate, white chocolate, aerated chocolates, compound coatings, and chocolate-like compositions, unless specifically identified otherwise. "Chocolate" also includes crumb solids or solids fully or partially made by a crumb process. The inner portion may be produced by any of any known molding or forming technique known to a skilled person in the art. If the inner portion is a soft center, then such center could be chilled or frozen before the outer shell is applied.

As used herein the term "heat tolerant" means a fat-based confection that retains its shape and/or can be handled with no visible leakage after exposure to elevated temperatures, temperatures of at least 30 degrees Celsius, or 32 degrees Celsius, or 34 degrees Celsius, or 36 degrees Celsius, or even 37 degrees Celsius or greater. Non-limiting methods of evaluating heat tolerance include: (i) tactile testing which is a method used to determine the extent to which a fat-based confection can be handled without leaving a residue and/or (ii) visual inspection of the food product during and/or after exposure to elevated temperatures confirms no visible leakage.

As used herein, the phrase "fat-based confection" means any confection including at least 17, or 20, or 23, or 25, or 27 or 29, or 30 or greater percent fat, from any source. In some embodiments, a fat-based confection includes cocoa solids and cocoa butter and/or cocoa butter alternative. As used herein, fat-based confections may include sugar, milk derived components, and fat and solids from vegetable or cocoa sources, or any other usual ingredient for chocolate such as lecithin for example, in different proportions. Fat-based confections may comprise non-cocoa butter fats, sugar and milk, nut pastes such as peanut butter and fat; and/or praline among others.

As used herein, the phrase "no visible leakage" means the inner portion of the food product is not visible upon visual inspection of the food product.

All percentages and ratios are calculated by weight unless otherwise indicated. All percentages and ratios are calculated based on the total composition unless otherwise indicated.

Unless otherwise noted, all component or composition levels are in reference to the active level of that component or composition, and are exclusive of impurities, for example, residual solvents or by-products, which may be present in commercially available sources.

The present inventors have created a product where, in embodiments, the messiness of handling chocolate products can be avoided even in temperatures of greater than 40 degrees Celsius. In embodiments, the outer shell forms a barrier which the inner portion is not able to breach under temperatures where the fat-based inner-portion would be expected to melt and then leak. The outer shell therefore retains the inner-portion at temperatures of at least 40 degrees Celsius and results in no visible leakage.

In embodiments, the present invention is a product comprising: an outer shell; and an inner portion; wherein the outer shell comprises a legume flour; wherein the inner portion comprises a chocolate composition; wherein the outer shell surrounds the inner portion; wherein the product is a ready-to-eat food; wherein an average moisture content of the outer shell is between 0.1 wt% and 5 wt%; and wherein, when the product is tested by exposing the product to 37 degrees Celsius for 3 minutes, the product exhibits no visible leakage.

In one or more embodiments detailed herein, the inner portion further comprises a legume.

In one or more embodiments detailed herein, the outer shell further comprises at least one of a cinnamon flavoring, a vanilla flavoring, or a cocoa flavoring.

In one or more embodiments detailed herein, the outer shell further comprises a rice starch.

In one or more embodiments detailed herein, the legume is coated with or enclosed in the chocolate composition.

In one or more embodiments detailed herein, the legume comprises peanut, chick pea, soybean, edamame, green pea, yellow pea, black eyed peas, pinto bean, kidney bean, black bean, mung, adzuki, fava, green lentil, red lentil, black lentil or combinations thereof.

In one or more embodiments detailed herein, the legume is a peanut.

In one or more embodiments detailed herein, the legume is at least one of a whole legume or a fragment of a legume.

In one or more embodiments detailed herein, the legume flour is a flour of chick pea, peanut, soybean, edamame, green pea, yellow pea, black eyed peas, pinto bean, kidney bean, black bean, mung, adzuki, fava, green lentil, red lentil, black lentil or combinations thereof.

In one or more embodiments detailed herein, the binding agent comprises pregelatinized starch, molasses, jaggery, rice syrup, brown rice syrup, corn syrup, high fructose corn syrup, alginates, agar, guar gum, locust bean, carrageenan, gum arabic, tragacanth, pectin, xanthan, gellan, maltodextrin, galactomannan, pullulan, laminarin, scleroglucan, gum arabic, inulin, pectin, chitin, cyclodextrin, chitosan, polyvinyl pyrrolidone, methylcellulose, hydroxypropylcellulose, hydroxypropylmethylcellulose, or a mixture thereof.

In one or more embodiments detailed herein, the binding agent comprises inulin, high fructose corn syrup, or brown rice syrup.

In one or more embodiments detailed herein, the outer shell comprises between 30% and 60%, and the inner portion comprises between 40% and 70%, based on the total weight of the product.

In one or more embodiments detailed herein, the chocolate composition comprises a chocolate or a compound chocolate.

In one or more embodiments detailed herein, the outer shell has a thickness between 0.8 to 4 mm.

In one or more embodiments detailed herein, the product is heat tolerant as measured by detecting no leakage when the product is exposed to a temperature of 37°C for 3 minutes.

In one or more embodiments detailed herein, the present invention is a method comprising: combining a legume flour and a starch to form a dry mix; combining a syrup and water to form a wet mix; coating a chocolate composition with the wet mix to form a first layer; coating the first layer with the dry mix to form a second layer; repeating the first layer coating step and the second layer coating step to form a multilayered outer shell on the inner portion to form a coated product; and heating the coated product to reduce moisture content of the outer shell and cohesively bind the applied layers; wherein the outer shell comprises 5 to 20 alternating layers of the wet mix and the dry mix; and wherein the coated product exhibits no visible leakage during the heating step.

In one or more embodiments detailed herein, the method further comprises: the outer shell comprising alternating layers of the wet mix and the dry mix.

In one or more embodiments detailed herein, the dry mix further comprises at least one of cocoa powder and baking soda.

In one or more embodiments detailed herein, the outer shell has a thickness between 0.8 to 4 mm.

In one or more embodiments detailed herein, the chocolate composition comprises a chocolate or compound chocolate.

In one or more embodiments detailed herein, the heating step comprises exposing the coated product to a temperature between 175 to 200°C for 2 to 20 minutes.

### Legume-Coated Food Product

In some embodiments, the outer shell surrounds a 100% of the inner portion. In other embodiments, the outer shell surrounds less than 100% of the inner portion. A non-limiting example where the outer shell surrounds less than 100% of the inner portion is a hemispherically shaped product, where a hemisphere of inner portion is surrounded by a hemisphere of outer shell, but wherein the flat surface of the inner portion is not covered by the outer shell.

In other embodiments, the outer shell comprises a hydrophilic binding agent, and a legume flour. Suitable hydrophilic binding agents include hydrophilic oligomers and polymers, including pregelatinized starch, molasses, jaggery, rice syrup, brown rice syrup, corn syrup, and hydrocolloids such as alginates, agar, guar gum, locust bean, carrageenan, gum arabic, tragacanth, pectin, xanthan, gellan, maltodextrin, galactomannan, pullulan, laminarin, scleroglucan, gum arabic, inulin, pectin, chitin, cyclodextrin, chitosan, polyvinyl pyrrolidone, and cellulosics (such as methylcellulose, hydroxypropylcellulose and hydroxypropylmethylcellulose); and derivatives and mixtures thereof. In the embodiments, the outer shell comprises legume flour, starch, oil and baking soda. In other embodiments, the outer shell is comprised of multiple layers, wherein a first layer comprises a hydrophilic binder, water and optional oil, emulsifier and/or salt, comprising a wet mix and a second layer comprises a legume flour, starch and baking soda, comprising a dry mix. In some embodiments, at least one of the first layer or the second layer is sufficiently wet, and the remaining layer of the first layer or the second layer is sufficiently dry, so as to allow the first layer and the second layer to adhere when contacted. In embodiments, the outer shell is formed of alternate layers of wet mix and dry mix. Once the outer shell is fully formed, the moisture content of the wet mix is reduced, e.g., apply heat to evaporate water, to provide desired organoleptic and physical properties of the final product.

In yet other embodiments, the outer shell comprises at least one legume flour, at least one of molasses, jaggery, chicory root extract, inulin or combinations thereof, rice flour, rice starch or corn starch, baking soda, cocoa powder, seasoning and/or flavorings, at least one oil and/or at least one emulsifier. In embodiments, the outer shell comprises 50 wt% to 90 wt% legume flour. In embodiments, the outer shell comprises 60 wt% to 85 wt% legume flour. In embodiments, the outer shell comprises 70 wt% to 80 wt% legume flour.

In some embodiments, the legume flour of the outer shell is selected from the group consisting of flours of chick pea, peanut, soybean, green pea, yellow pea, black eyed peas, pinto bean, kidney bean, black bean, mung, adzuki, fava, green lentil, red lentil, black lentil and combinations thereof. In some embodiments, the legume flour of the outer shell is a flour of chick pea, peanut, yellow pea, fava bean, or mixtures thereof.

In some embodiments, the outer shell includes a plurality of flours, e.g., but not limited to, 2, 3, 4, 5, 6, 7, 8, 9, 10, etc. flours. In some embodiments, the outer shell includes at least 2 or more flours. In some embodiments, the outer shell includes at least 3 or more flours.

In some embodiments, the plurality of flours can be chickpea flour and rice flour. In some embodiments, the plurality of flours can be peanut flour and rice flour. In some embodiments, the plurality of flours can be chickpea flour, peanut flour, or rice flour, or any combination thereof.

In embodiments, the outer shell comprises 5 wt% to 50 wt% starch. In embodiments, the outer shell comprises 5 wt% to 40 wt% starch. In embodiments, the outer shell comprises 10 wt% to 30 wt% starch. In embodiments, the outer shell comprises 15 wt% to 25 wt% starch. In embodiments, the outer shell comprises 20 wt% starch.

In embodiments, the starch may comprise at least one of rice starch and corn starch. In embodiments, the starch is rice starch. In other embodiments, the starch is corn starch. In other embodiments, the outer shell comprises at least one grain-based starch. In the embodiments, the grain-based starch may include, but is not limited to, wheat, rice, millet, or other cereal. In some embodiments, the grain-based starch is added to change the texture of the product, particularly in the outer shell, such as making the shell crispier.

In embodiments, the outer shell comprises 0.5 wt% to 5 wt% baking soda. In embodiments, the outer shell comprises 0.6 wt% to 4 wt% baking soda. In embodiments, the outer shell comprises 1 wt% to 3 wt% baking soda.

In embodiments, the outer shell comprises 1 wt% to 20 wt% cocoa powder. In embodiments, the outer shell comprises 5 wt% to 18 wt% cocoa powder. In embodiments, the outer shell comprises 10 wt% to 15 wt% cocoa powder.

In some embodiments, the outer shell comprises 10 wt% to 40 wt% molasses, jaggery, inulin, sugar syrup (e.g., rice syrup, corn syrup, glucose syrup, cane syrup, or sucrose syrup) or combinations thereof, based on solid weight contents. In some embodiments, the outer shell comprises 10 wt% to 40 wt% molasses, inulin, sugar syrup or combinations thereof. In some embodiments, the outer shell comprises 15 wt% to 30 wt% molasses, inulin, sugar syrup or combinations thereof. In some embodiments, the outer shell comprises 15 wt% to 20 wt% molasses, inulin, sugar syrup or combinations thereof. In some embodiments, the outer shell comprises 15 wt% to 20 wt% of a combination of inulin and glucose or brown rice syrup.

In some embodiments, the outer shell comprises 0.1 wt% to 3 wt% flavoring and/or seasonings. In some embodiments, the outer shell comprises 0.2 wt% to 2 wt% flavoring and/or seasonings. In some embodiments, the outer shell comprises 0.3 wt% to 1 wt% flavoring and/or seasonings. In some embodiments, the flavoring and/or seasonings include vanilla extract and/or cinnamon. In some embodiments, the flavoring and/or seasonings are included in the wet mix.

In embodiments, the outer shell comprises an emulsifier. In embodiments, the emulsifier is a food-grade emulsifier, such as lecithin. In embodiments, the emulsifier comprises 0.05 wt% to 1 wt%. In embodiments, the at least one emulsifier comprises 0.05 wt% to 0.5 wt%. In embodiments, the at least one emulsifier comprises 0.1 wt% to 0.2 wt%. In some embodiments, the emulsifier is included in the wet mix.

In embodiments, the outer shell comprises at least one oil. In embodiments, the oil is palm oil, sunflower oil, soy oil, peanut oil, olive oil, or fractions or combinations thereof. The outer shell may further comprise a leavening agent, e.g., backing soda (sodium bicarbonate). The outer shell may further comprise an oil, e.g., sunflower oil, soybean oil, or peanut oil. In embodiments, the at least one oil comprises 0.1 wt% to 3 wt%. In embodiments, the oil comprises 0.2 wt% to 2 wt%. In embodiments, the oil comprises 0.3 wt% to 1 wt%. In some embodiments, the oil is included in the wet mix.

In embodiments, the wet mix comprises 1% to 20% water. In embodiments, the wet mix comprises 3% to 20% water. In embodiments, the wet mix comprises 5% to 15% water.

In some embodiments, the thickness of the outer shell of the final product is from 0.8 to 4 mm. In some embodiments, the thickness of the outer shell is from 0.9 to 3 mm. In some embodiments, the thickness of the outer shell is from 1 to 2 mm. In some embodiments, the thickness of the outer shell is from 1.2 to 1.5 mm.

In some embodiments, the inner portion comprises a ready-to-eat legume that is coated with chocolate or compound chocolate. In some embodiments, the ready-to-eat legume is selected from the group consisting of peanut, chick pea, soybean, green pea, yellow pea, black eyed peas, pinto bean, kidney bean, black bean, mung, adzuki, fava, green lentil, red lentil, black lentil and combinations thereof. In other embodiments, the ready-to-eat legume is selected from the group consisting of seed of peanut, chick pea, soybean, green pea, yellow pea, black eyed peas, pinto bean, kidney bean, black bean, mung, adzuki, fava, green lentil, red lentil, black lentil and combinations thereof. In other embodiments, the ready-to-eat legume is a roasted legume. In some embodiments, the chocolate-coated composition is a chocolate-coated peanut.

In some embodiments, the inner portion comprises a ready-to-eat legume as detailed herein. In some embodiments, the inner portion comprises a nut butter that is coated with chocolate or compound chocolate. In some embodiments, the nut butter is peanut butter, almond butter, hazelnut butter, pistachio nut butter, macadamia nut butter, or any combination thereof.

In some embodiments, the inner portion includes a chocolate composition center, where the chocolate composition center comprises chocolate, crunchy chocolate, aerated chocolate, creamy chocolate, or compound chocolate. In some embodiments, the chocolate composition center includes one continuous chocolate piece or a plurality of chocolate pieces (e.g., but not limited to 2 pieces, 3 pieces, 4, pieces, 5 pieces, 6 pieces, 7 pieces, 8 pieces, 9 pieces, 10 pieces, etc.). In another embodiment, the inner portion could be a combination of chocolate and non-chocolate. In an embodiment, the outer surface of the inner portion, where the inner portion contacts the outer shell, comprises chocolate. In some embodiments, the chocolate surrounding the inner portion contacting the outer shell is configured to reduce moisture migration to the outer shell.

In some embodiments, the inner portion comprises a freeze-dried fruit (e.g., but not limited to blueberry, strawberry, raspberry, blackberry, pomegranate, pineapple, apple, pear, watermelon, etc.) and/or a fruit puree (e.g., but not limited to blueberry, strawberry, raspberry, blackberry, pomegranate, pineapple, apple, pear, watermelon, etc.). In some embodiments, the freeze-dried fruit and/or the fruit puree is surrounded by, e.g., but not limited to, a chocolate composition.

In some embodiments, the outer shell and/or the inner portion includes one or more natural or artificial dye. In some embodiments, the outer shell comprises a natural colorant including but not limited to beetroot powder, paprika, and/or green pea flour and/or cocoa powder (browns), cinnamon, vanilla, or fruit powders. In some embodiments, the outer shell and/or the inner portion includes one or more natural or artificial flavorings. In some embodiments, the outer shell and/or the inner portion includes a flavoring such as chocolate, vanilla, cinnamon, and any combination thereof.

In some embodiments, the average moisture content of the inner cocoa-containing center of the final product is between 0.1-1 wt%. In some embodiments, the average moisture content of the inner cocoa-containing center is between 0.2-1 wt%. In some embodiments, the average moisture content of the inner cocoa-containing center is between 0.3-1 wt%. In some embodiments, the average moisture content of the inner cocoa-containing center is between 0.4-1 wt%. In some embodiments, the average moisture content of the inner cocoa-containing center is between 0.5-1 wt%.

In some embodiments, the average moisture content of the outer shell of the final product is less than 5 wt%. In some embodiments, the average moisture content of the outer shell is less than 4 wt%. In some embodiments, the average moisture content of the outer shell is less than 3 wt%. In some embodiments, the average moisture content of the outer shell is less than 2 wt%. In some embodiments, the average moisture content of the outer shell is between 3 wt% and 1 wt%.

In one embodiment, a weight ratio of the outer shell and the inner portion of the final product is 1:5 to 5:1. In yet another embodiment, a weight ratio of the outer shell and the inner portion is 1:4 to 4:1. In an embodiment, a weight ratio of the outer shell and the inner portion is 1:3 to 3:1. In another embodiment, a weight ratio of the outer shell and the inner portion is 1:2 to 2:1. In another embodiment, a weight ratio of the outer shell and the inner portion is 1:1. In an embodiment, a weight ratio of the outer shell and the inner portion is 3:1. In an embodiment, a weight ratio of the outer shell and the inner portion is 2:1. In an embodiment, a weight ratio of the outer shell and the inner portion is 4:1. In an embodiment, a weight ratio of the outer shell and the inner portion is 2:3. In an embodiment, a weight ratio of the outer shell and the inner portion is 3:2.

In embodiments, the product has a shelf-life of at least 3 months. In other embodiments, the product has a shelf-life of at least 4 months. In other embodiments, the product has a shelf-life of at least 5 months. In other embodiments, the product has a shelf-life of at least 6 months. In other embodiments, the product has a shelf-life of at least 7 months. In other embodiments, the product has a shelf-life of at least 8 months. In other embodiments, the product has a shelf-life of at least 9 months. In other embodiments, the product has a shelf-life of at least 10 months. In other embodiments, the product has a shelf-life of at least 11 months. In other embodiments, the product has a shelf-life of at least 12 months. In other embodiments, the product has a shelf-life of greater than 12 months.

In embodiments, the product is heat tolerant to a temperature of at least 35 degrees Celsius. In embodiments, the product is heat tolerant to a temperature of at least 37 degrees Celsius. In embodiments, the product is heat tolerant to a temperature of at least 42 degrees Celsius. In embodiments, the product is heat tolerant to a temperature of at least 45 degrees Celsius. In embodiments, the product is heat tolerant to a temperature of at least 50 degrees Celsius. Celsius.

In some embodiments, the product has an outer shell with an average moisture content of less than 0.1 wt% or greater than 5 wt%, and the product is heat tolerant to a temperature of at least 35 degrees Celsius. In some embodiments, the product has an outer shell with an average moisture content of less than 0.1 wt% or greater than 5 wt%, and the product is heat tolerant to a temperature of at least 37 degrees Celsius. In some embodiments, the product has an outer shell with an average moisture content of less than 0.1 wt% or greater than 5 wt%, and the product is heat tolerant to a temperature of at least 40 degrees Celsius. In some embodiments, the product has an outer shell with an average moisture content of less than 0.1 wt% or greater than 5 wt%, and the product is heat tolerant to a temperature of at least 50 degrees Celsius.

In embodiments, the product, when the product is tested by exposing the product to 37 degrees Celsius for 3 minutes, the product exhibits no visible leakage. In embodiments, the product is exposed to 37 degrees Celsius for 3 minutes by placing the product on a heating pad includes any device having a substantially flat heating surface configured to expose the legume-coated food product to an elevated temperature. In embodiments, the product, when the product is tested by exposing the product to 39 degrees Celsius for 3 minutes, the product exhibits no visible leakage. In embodiments, the product, when the product is tested by exposing the product to 42 degrees Celsius for 3 minutes, the product exhibits no visible leakage. In embodiments, the product, when the product is tested by exposing the product to 45 degrees Celsius for 3 minutes, the product exhibits no visible leakage. In embodiments, the product, when the product is tested by exposing the product to 50 degrees Celsius for 3 minutes, the product exhibits no visible leakage.

In embodiments, a protein content per 100 grams serving of the product is at least 8 grams. In embodiments, a protein content per 100 grams serving of the product is at 9 grams.

In some embodiments, chickpea flour is used as the legume flour in the outer shell, as a means to provide the improved nutritional profile.

In some embodiments, the product contains an inner portion, where the inner portion contains a lentil-shaped or spheroidal-shaped center. In some embodiments, the product has an average diameter of from 10 to 20mm. In some embodiments, the product has an average diameter of from 11 to 18mm.

In some embodiments, each product weighs about 0.5 to 5 grams. In some embodiments, each product weighs about 1to 4 grams. In some embodiments, each product weighs about 1.5 to 3 grams.

### Non-Limiting Methods of Making Legume-Coated Food Products

In embodiments, the legume-coated food product detailed in one or more embodiments herein may be made by a method that includes combining a legume flour and a starch to form a dry mix. In the embodiments, the dry mix may further include baking soda, cocoa powder, or mixtures thereof. In embodiments, the legume flour is a flour of chick pea, peanut, soybean, edamame, green pea, yellow pea, black eyed peas, pinto bean, kidney bean, black bean, mung, adzuki, fava, green lentil, red lentil, black lentil or combinations thereof. In embodiments, the legume flour is chick pea flour.

In embodiments the starch is at least one of rice starch, corn starch, a grain-based starch detailed herein, or combinations thereof. In the embodiments, the starch is rice starch. In yet other embodiments, the starch is corn starch. In another embodiment, the starch is a grain-based starch.

In other embodiments, the dry mix does not include cocoa powder.

In embodiments, the method includes combining a hydrophilic binding agent and water to form a wet mix. In embodiments, the combining to form the wet mix include blending the hydrophilic binding agent and the water. In one or more embodiments detailed herein, the binding agent comprises pregelatinized starch, molasses, jaggery, rice syrup, brown rice syrup, corn syrup, alginates, agar, guar gum, locust bean, carrageenan, gum arabic, tragacanth, pectin, xanthan, gellan, maltodextrin, galactomannan, pullulan, laminarin, scleroglucan, gum arabic, inulin, pectin, chitin, cyclodextrin, chitosan, polyvinyl pyrrolidone, methylcellulose, hydroxypropylcellulose, hydroxypropylmethylcellulose, or a mixture thereof.

In one or more embodiments detailed herein, the binding agent comprises inulin or brown rice syrup.

In embodiments, the wet mix further includes seasoning and/or flavorings. In some embodiments, the wet mix further includes cinnamon, vanilla extract, or combinations thereof.

In yet other embodiments, the wet mix may include comprises at least one of molasses, jaggery, inulin, sugar syrup (e.g., rice syrup, corn syrup, glucose syrup, cane syrup, or sucrose syrup) or combinations thereof. In embodiments, the wet mix further includes sucrose, glucose, maltose, lactose, fructose, corn syrup, corn syrup solids, agave syrup, tapioca syrup or a combination thereof. In some embodiments, the wet mix may also include soluble fibers, such as polydextrose, inulin, or other suitable soluble fibers, are partially or entirely employed as the soluble carbohydrate content in the wet mix. The wet mix may further include flavoring agents, such as water soluble flavor or other additives. The wet mix may be preheated and cooled prior to application to the inner portion of the food product detailed herein.

In the embodiments, the method may also include forming an inner chocolate composition of the food product. In the embodiments, the chocolate composition may include chocolate or a chocolate-coated legume. In embodiments, the chocolate composition is a chocolate-coated peanut.

In embodiments, the inner chocolate composition may further include any constituents detailed herein such as ready-to-eat legumes, ready-to-eat legume seeds, ready to eat fruit, chocolate component, and/or creamy component, or a combination thereof. In some embodiments, the ready to eat fruit can include a dehydrated fruit portion, fruit inclusions suspended in the inner chocolate composition, nut inclusions suspended in the chocolate composition, a protein rich core (e.g., but not limited to, a composition including whey protein, soy protein, or combinations thereof), a nut (e.g., but not limited to, a hazelnut, a brazil nut, etc.), vegetable inclusions suspended in the chocolate composition, or any combination thereof.

In the embodiments, the method further includes coating the chocolate composition with the wet mix to form a first layer. In embodiments the outer shell is formed by applying alternating wet and dry layers onto the inner portion by using the method described in WO2004/016103 and WO2004/016116.

In the embodiments, the method further includes coating the first layer with the dry mix to form a second layer. In some embodiments, the chocolate composition is first coated with a wet mix layer and then second coated with a dry mix layer. In embodiments, the dry mix and the wet mix form alternating layers.

In embodiments, the method includes repeating the first layer coating step and the second layer coating step to form the outer shell on the chocolate composition to form a coated product.

In embodiments, the method further includes repeating the first coating step and the second coating step to form a coated product having an outer shell and an inner chocolate composition. In embodiments, the outer shell comprises 5 to 20 alternating layers of the wet mix and the dry mix. In embodiments, the outer shell comprises 7 to 20 alternating layers of the wet mix and the dry mix. In embodiments, the outer shell comprises 10 to 20 alternating layers of the wet mix and the dry mix. In embodiments, the outer shell comprises 12 to 20 alternating layers of the wet mix and the dry mix. In embodiments, the outer shell comprises 15 to 20 alternating layers of the wet mix and the dry mix. In embodiments, the outer shell comprises 17 to 20 alternating layers of the wet mix and the dry mix.

In some embodiments, more than one wet or dry layers are successively applied. For example, two successive wet layers can be applied before a dry layer is applied over the wet layers. In some embodiments, the outer shell comprises about 10 wet coating layers and about 5 dry coating layers. In some embodiments, the outer shell comprises about 10 wet coating layers and about 8 dry coating layers. In some embodiments, the outer shell comprises about 10 wet coating layers and about 12 dry coating layers. In some embodiments, the outer shell comprises about 10 wet coating layers and about 15 dry coating layers. In some embodiments, the outer shell comprises about 10 wet coating layers and about 20 dry coating layers.

In embodiments, the thickness of each layer is 50 to 300 microns. In embodiments, the thickness of each layer is 100 to 300 microns. In embodiments, the thickness of each layer is 150 to 300 microns. In embodiments, the thickness of each layer is 200 to 300 microns. In embodiments, the thickness of each layer is 250 to 300 microns. In embodiments, the thickness of each layer is 50 to 250 microns. In embodiments, the thickness of each layer is 50 to 200 microns. In embodiments, the thickness of each layer is 50 to 150 microns. In embodiments, the thickness of each layer is 50 to 100 microns.

In embodiments, the method includes heating the coated product to reduce moisture content of the outer shell and cohesively bind the applied layers, where the coated product exhibits no visible leakage during the heating step.

In embodiments, the method includes heating the coated product to a temperature of 175 degrees to 200 degrees Celsius, or 176 degrees to 192 degrees Celsius, for 2 to 10 minutes to reduce moisture content of the outer shell and cohesively bind the applied layers, where the coated product exhibits no visible leakage during the heating step. In embodiments, the method includes heating the coated product to a temperature of 176 degrees to 192 degrees Celsius for 2 to 20 minutes, where the coated product exhibits no visible leakage during the heating step. In embodiments, the method includes heating the coated product to a temperature of 180 degrees to 192 degrees Celsius for 2 to 20 minutes, where the coated product exhibits no visible leakage during the heating step. In some instances, a wet coating layer may be applied in more than one dose if the coverage of the product is found not to be uniform.

In some embodiments, the product is not formed from an extrusion process. In other embodiments, the layers of the outer shell are added directly to the inner portion without any protective coating over the inner portion.

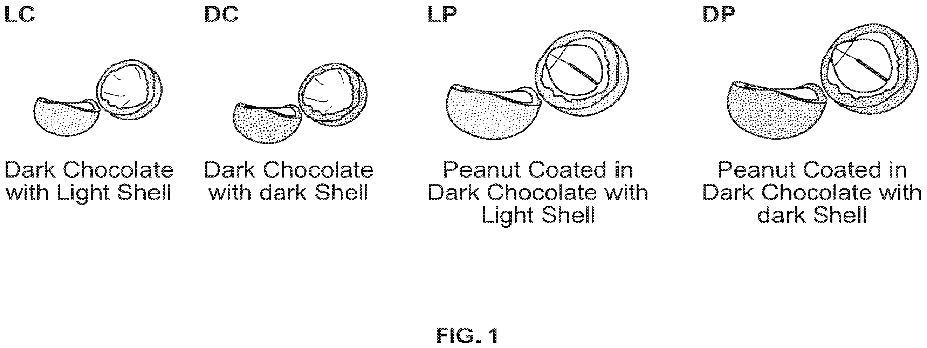

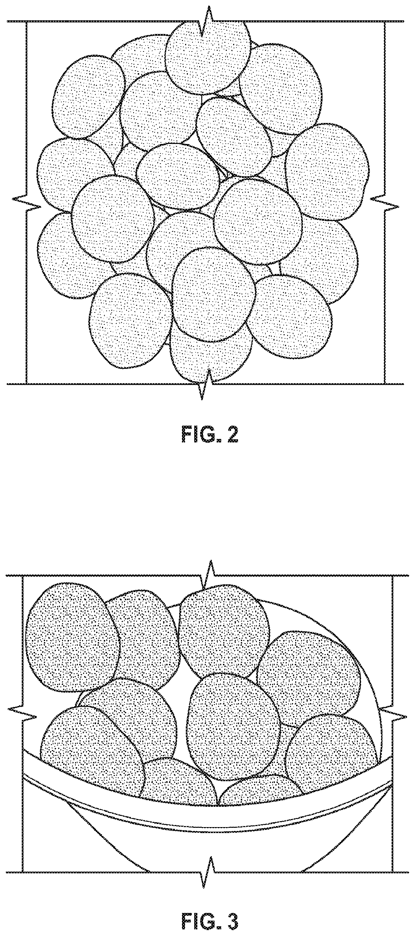

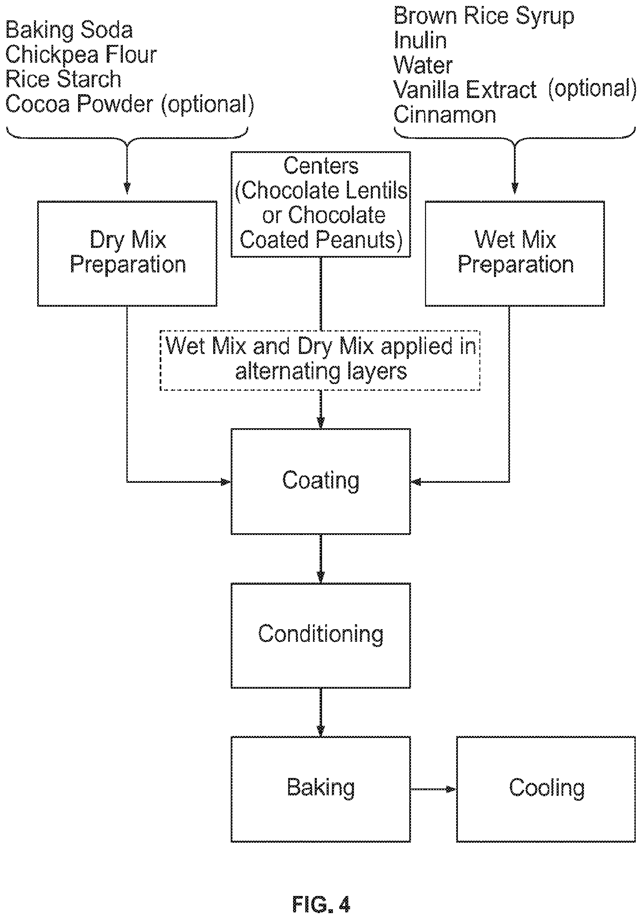

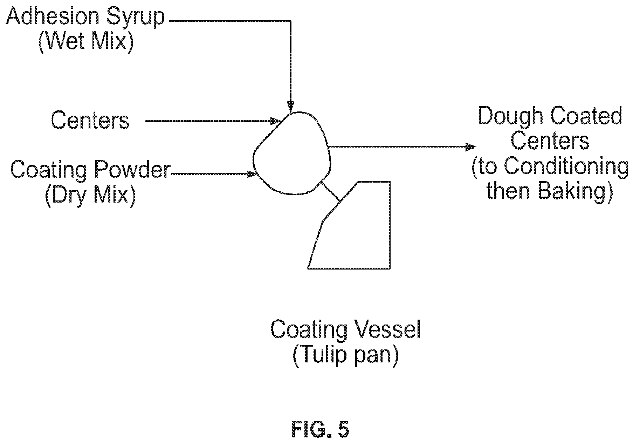

Figures 1-5 show images of embodiments of the product of the present invention. Figures 4 and 5 show embodiments of the process for making the product of the present invention.

In some embodiments, the product of the present invention may be further processed by applying a sugar shell coating being in between the chocolate and the dough. A detailed description of panning can be found in B. W. Minifie, "Chocolate, Cocoa, and Confectionery Science and Technology," 3.sup.rd ed., (1999) pp. 184, 221-223, 506, 608-609, and 613.

In another embodiment, the cocoa-containing inner portion can be replaced by another fat-containing confection inner portion. Such centers could be popular fillings for chocolate confectionery products such as creams, caramel and nougat.

### Non-Limiting Examples

Non-limiting examples of products according to embodiments of the present invention are detailed below. Unless otherwise noted, the examples shown in Figures 1-3 were produced using the process detailed in Figures 4 and 5. Unless otherwise noted, the alternating wet and dry layers are applied onto the inner portion by using the method described in WO2004/016103 and WO2004/016116. Examples 1-5 of the outer shell described below have an average of about 10 wet coating layers and about 10 dry coating layers. In some instances, a wet coating layer had to be applied in more than one dose if the coverage of the product was found not to be uniform.

### Example 1

Example 1 includes a peanut surrounded in a dark chocolate inner portion and an outer shell chickpea flour, flavored with vanilla and cinnamon, which was manufactured by alternating wet and dry layers having the composition shown in Table 5. The coated product was baked at 350 degrees Fahrenheit for 10 minutes and vibrated every 2-10 minutes during heating, or 192 degrees Celsius for 3 minutes to form the legume-coated food product. The legume-coated food product exhibited no visible leakage during the baking process.

Example 1 has the following characteristics as shown in Table 1 below:

**Table 1:**

| | Serving g | 30.00 | | | | | |
|---|---|---|---|---|---|---|---|
| | Calories (kcal) | Protein (g) | Fat (g) | Sat fat (g) | Sugar (g) | Fiber (g) | Na (mg) |
| Nutritional Facts Per Serving Size | 130 | 3 | 7 | 3 | 6 | 6 | 85 |
| Percentages in grams | | 10 | 23 | | 20 | 20 | |
| Reference Intake % UK per serving size | 6.5 | 6 | 10 | 15 | 7.7 | 20 | 3.5 |
| Reference intakes UK | (2000 Kcal) | (10%) (50g) | (31.5%) (70g) | (20g) | (35% of CHO) (90g) | (30g) | (2400mg) |
| Reference intake % US per serving size | 6.5 | NA | 10.7 | 15 | 6.6 | 24 | 3.5 |
| Reference intake US | (2000 Kcal) | NA | (65g) | (20g) | (35% of CHO 105g) | (25g) | (2400mg) |

### Example 2

Example 2 includes a dark chocolate surrounded peanut inner portion and an outer shell flavored with cocoa, manufactured alternating wet and dry layers having the composition shown in Table 5. The coated product was subject to the same heating/vibration detailed in Example 1. The legume-coated food product exhibited no significant visible leakage during the baking process. Example 2 has the following characteristics as shown in Table 2 below:

**Table 2:**

| | Serving g | 30 | | | | | |
|---|---|---|---|---|---|---|---|
| | Calories (kcal) | Protein (g) | Fat (g) | Sat fat (g) | Sugar (g) | Fiber (g) | Na (mg) |
| Nutritional Facts Per Serving Size | 120 | 3 | 6 | 3.5 | 7 | 6 | 100 |
| Percentages in grams | | 10 | 20 | | 23.33 | 20 | |
| Reference Intake % UK per serving size | 6 | 6 | 8.6 | 17.5 | 7.7 | 20 | 4.16 |
| Reference intakes UK | (2000 Kcal) | (10%) (50g) | (31.5%) (70g) | (20g) | (35% of CHO) (90g) | (30g) | (2400mg) |
| Reference intake % US per serving size | 6 | NA | 9.2 | 17.5 | 6.6 | 24 | 4.16 |
| Reference intake US | (2000 Kcal) | NA | (65g) | (20g) | (35% of CHO)(105g) | (25g) | (2400mg) |

### Example 3

Example 3 includes a dark chocolate surrounded peanut center inner portion and an chickpea flour outer shell flavored with cinnamon and vanilla, manufactured by alternating wet and dry layers having the composition shown in Table 5. The coated product was subject to the same heating/vibration detailed in Example 1. The legume-coated food product exhibited no visible leakage during the baking process. Example 3 has the following characteristics as shown in Table 3 below:

**Table 3:**

| | Serving g | 30 | | | | | |
|---|---|---|---|---|---|---|---|
| | Calories (kcal) | Protein (g) | Fat (g) | Sat fat (g) | Sugar (g) | Fiber (g) | Na (mg) |
| Nutritional Facts Per Serving Size | 140 | 4 | 8 | 3.5 | 6 | 6 | 70 |
| Percentages in grams | | 13.3 | 26.67 | | 20 | 20 | |
| Reference Intake % UK per serving size | 7 | 8 | 11.4 | 17.5 | 67 | 20 | 2.92 |
| Reference intakes UK | (2000 Kcal) | (10%) (50g) | (31.5%) (70g) | (20g) | (35% of CHO) (90g) | (30g) | (2400mg) |
| Reference intake % US preserving size | 7 | NA | 12.3 | 17.5 | 5.7 | 24 | 2.92 |
| Reference intake US | (2000 Kcal) | NA | (65g) | (20g) | (35% of CHO) (105g) | (25g) | (2400mg) |

### Example 4

Example 4 includes a chocolate surrounded chick pea inner portion and an outer shell flavored with cocoa, manufactured alternating wet and dry layers having the composition shown in Table 5. The coated product was subject to the same heating/vibration detailed in Example 1. The legume-coated food product exhibited no visible leakage during the baking process. Example 4 has the following characteristics as shown in Table 4 below:

**Table 4:**

| | Serving g | 30 | | | | | |
|---|---|---|---|---|---|---|---|
| | Calories (kcal) | Protein (g) | Fat (g) | Sat fat (g) | Sugar (g) | Fiber (g) | Na (mg) |
| Nutritional Facts Per Serving Size | 120 | 3 | 6 | 3.5 | 7 | 7 | 95 |
| Percentages in grams | | 10 | 20 | | 23.33 | 23.3 | |
| Reference Intake % UK per serving size | 6 | 6 | 8.57 | 17.5 | 7.7 | 23.3 | 3.95 |
| Reference intakes UK | (2000 Kcal) | (10%) (50g) | (31.5%) (70g) | (20g) | (35% of CHO) (90g) | (30g) | (2400mg) |
| Reference intake % US per serving size | 6 | NA | 9.23 | 17.5 | 6.6 | 28 | 3.95 |
| Reference intake US | (2000 Kcal) | NA | (65g) | (20g) | (35% of CHO) (105g) | (25g) | (2400mg) |

**Table 5:**

| **Component** | **Weight percent** |
|---|---|
| Chocolate inner portion | 50-60% |
| Chick pea flour | 15.6-23.1% |
| Rice syrup and/or glucose syrup | 6.72-8.4% |
| Inulin 90 syrup | 6.72-8.4% |
| Rice starch | 4.8-6% |
| Cocoa powder Red | 0-3.6% |
| Water | 2.3-2.9% |
| Baking soda (sodium bicarbonate) | 0.72-0.9% |
| Vanilla extract | 0.16-0.2% |
| Cinnamon ground dried | 0.064-0.08% |

### Example 5

Example 5 is a product having a chocolate center inner portion and a chickpea coating flavored with cinnamon and vanilla. The legume-coated food product exhibited no visible leakage during the baking process. Example 5 exhibits the characteristics shown in Table 6 below:

**Table 6:**

| | Serving g | 32.00 | | | | | |
|---|---|---|---|---|---|---|---|
| | Calories (kcal) | Protein (g) | Fat (g) | Sat fat (g) | Sugar (g) | Fiber (g) | Na (mg) |
| Nutritional Facts Per Serving Size | 149.76 | 2.86 | 6.11 | 3.26 | 9.86 | 3.87 | 91.15 |
| Percentages in grams | | 8.95 | 19.08 | | 30.80 | 12.08 | |
| Reference Intake % UK per serving size | 7.49 | 5.73 | 8.72 | 16.32 | 10.95 | 12.89 | 3.80 |
| Reference intakes UK | (2000 Kcal) | (10%) (50g) | (31.5%) (70g) | (20g) | (35% of CHO) (90g) | (30g) | (2400mg) |

### Example 6

Example 6 included a product having a chocolate center inner portion and a chickpea coating flavored with cocoa. The legume-coated food product exhibited no visible leakage during the baking process. Example 6 exhibits the characteristics shown in Table 7 below:

**Table 7:**

| | Serving g | 32.00 | | | | | |
|---|---|---|---|---|---|---|---|
| | Calories (kcal) | Protein (g) | Fat (g) | Sat fat (g) | Sugar (g) | Fiber (g) | Na (mg) |
| Nutritional Facts Per Serving Size | 149.44 | 2.79 | 6.16 | 3.35 | 9.66 | 3.96 | 90.56 |
| Percentages in grams | | 8.73 | 19.25 | | 30.20 | 12.38 | |
| Reference Intake % UK per serving size | 7.47 | 5.59 | 8.80 | 16.77 | 10.74 | 13.21 | 3.77 |
| Reference intakes UK | (2000 Kcal) | (10%) (50g) | (31.5%) (70g) | (20g) | (35% of CHO) (90g) | (30g) | (2400mg) |

Table 5 shows the ingredients which are included in either the cocoa-containing center or the outer shell of the product, and the location of the ingredients are shown.

### Example 7 and 8

Examples 7 and 8 include a legume-coated food product having an outer shell formed by alternating layers of the wet and dry mix and an inner portion of chocolate. As shown in Table 8 (example 7) and Table 9 (example 8) below, the dry mix is comprised of chick pea flour, rice starch, cocoa powder (example 8 only) and baking soda and the wet mix is comprised of inulin, water, vanilla powder, cinnamon, sunflower oil, and lecithin. The wet mix was first homogenized with a blender prior to application. After applying alternating layers of wet mix and dry mix over an inner portion comprising chocolate, the product was exposed to 176 degrees Celsius for 3 minutes to form a legume-coated food product. The legume-coated food product exhibited no visible leakage during the heating step. The outer shell of the legume-coated food product comprises about 60% by weight of the dry mix layers and 40% by weight of the wet mix layers. The legume-coated food product comprises about 50% by weight of the outer shell and 50% with weight of the inner portion.

**Table 8**

| Dry Mix/Wet Mix | Ingredient | Mass (kg) | Weight Percent% (based on weight of dry mix or wet mix) | Weight Percent % (based on wt of outer shell) |
|---|---|---|---|---|
| Dry Mix | Chick Pea Flour | 69.3 | 77 | 46.2 |
| Dry Mix | Rice Starch | 18 | 20 | 12 |
| Dry Mix | Baking Soda | 2.7 | 3 | 1.8 |
| Wet Mix | Inulin L90 | 52.6 | 87.6 | 35.04 |
| Wet Mix | Water | 6 | 10 | 4 |
| Wet Mix | Vanilla Powder | 0.6 | 1 | 0.4 |
| Wet Mix | Cinnamon | 0.12 | 0.2 | 0.08 |
| Wet Mix | High Oleic Sunflower Oil | 0.6 | 1 | 0.4 |
| Wet Mix | Lecithin | 0.12 | 0.2 | 0.08 |

**Table 9**

| Dry Mix/Wet Mix | Ingredient | Mass (kg) | Weight Percent% (based on weight of dry mix or wet mix) | Weight Percent % (based on wt of outer shell) |
|---|---|---|---|---|
| Dry Mix | Chick Pea Flour | 69.3 | 65 | 39 |
| Dry Mix | Rice Starch | 18 | 20 | 12 |
| Dry Mix | Cocoa Powder | 0 | 12 | 7.2 |
| Dry Mix | Baking Soda | 2.7 | 3 | 1.8 |
| Wet Mix | Inulin L90 | 52.6 | 87.6 | 35.04 |
| Wet Mix | Water | 6 | 10 | 4 |
| Wet Mix | Vanilla Powder | 0.6 | 1 | 0.4 |
| Wet Mix | Cinnamon | 0.12 | 0.2 | 0.08 |
| Wet Mix | High Oleic Sunflower Oil | 0.6 | 1 | 0.4 |
| Wet Mix | Lecithin | 0.12 | 0.2 | 0.08 |

### Example 9

Example 9 includes legume-coated food products comprising a chocolate or chocolate-coated peanut inner portion surrounded by a chick pea flour outer shell. The outer shell was produced by alternating wet and dry layers and has the composition shown in Table 8. The average thickness of the outer shell of each product was about 1470 microns for the chocolate-peanut inner portion and about 1410 microns for the chocolate inner portion.

### Prophetic Example 10

A legume-coated food product described in Examples 7 and 8 are placed on a pad heated to 37 degrees Celsius for 3 minutes. Visual inspecting the samples shows the product exhibits no visible leakage.

While a number of embodiments of the present invention have been described, it is understood that these embodiments are illustrative only, and not restrictive, and that many modifications may become apparent to those of ordinary skill in the art. Further still, the various steps may be carried out in any desired order (and any desired steps may be added and/or any desired steps may be eliminated).

### The present disclosure may also be described by one or more of the following paragraph(s) or "para(s)"

1. A chocolate composition product comprising:
   an outer shell comprising a legume flour and a hydrophilic binding agent, and
   an inner portion comprising a chocolate composition,
   wherein the outer shell surrounds the inner portion,
   wherein the product is a ready-to-eat food,
   wherein an average moisture content of the outer shell is between 0.1% and 5%, and wherein, when the chocolate composition product is tested by exposing the product to 37 °C for 3 minutes, the chocolate composition product exhibits substantially no visible leakage.
2. The product of para 1, wherein the inner portion further comprises a legume.
3. The product of para 1, wherein the outer shell further comprises at least one of a cinnamon flavoring, a vanilla flavoring, or a cocoa flavoring.
4. The product of para 1, wherein the outer shell further comprises a rice starch.
5. The product of para 2, wherein the legume is coated with or enclosed in the chocolate composition.
6. The product of para 5, wherein the legume comprises peanut, chick pea, soybean, green pea, yellow pea, black eyed peas, pinto bean, kidney bean, black bean, mung, adzuki, fava, green lentil, red lentil, or black lentil.
7. The product of para 5, wherein the legume is a peanut.
8. The product of para 1, wherein the legume flour is a flour of chick pea, peanut, soybean, green pea, yellow pea, black eyed peas, pinto bean, kidney bean, black bean, mung bean, adzuki, fava, green lentil, red lentil, black lentil or combinations thereof.
9. The product of para 1, wherein the binding agent comprises pregelatinized starch, molasses, jaggery, rice syrup, brown rice syrup, corn syrup, alginates, agar, guar gum, locust bean, carrageenan, gum arabic, tragacanth, pectin, xanthan, gellan, maltodextrin, galactomannan, pullulan, laminarin, scleroglucan, gum arabic, inulin, pectin, chitin, cyclodextrin, chitosan, polyvinyl pyrrolidone, methylcellulose, hydroxypropylcellulose, hydroxypropylmethylcellulose, or a mixture thereof.
10. The product of para 9, wherein the binding agent comprises inulin or brown rice syrup.
11. The product of para 1, wherein the outer shell comprises between 30% and 60%, and the inner portion comprises between 40% and 70%, based on the total weight of the product.
12. The product of para 1, wherein the chocolate composition comprises a chocolate or a chocolate or compound chocolate.
13. The product of para 11, wherein the outer shell has a thickness between 0.8 to 4 mm.
14. The product of para 1, wherein the product is heat tolerant as measured by detecting no leakage when the product is exposed to a temperature of 37°C for 3 minutes.
15. A method for producing a coated chocolate composition product comprising a chocolate composition and an outer shell, the method comprising:
   combining a legume flour and a starch to form a dry mix,
   combining a hydrophilic binding agent and water to form a wet mix,
   coating the chocolate composition with the wet mix to form a first layer,
   coating the first layer with the dry mix to form a second layer,
   repeating the first layer coating step and the second layer coating step to form the outer shell on the chocolate composition to form a coated product, and heating the coated product to reduce moisture content of the outer shell and cohesively bind the applied layers,
   wherein the outer shell comprises 5 to 20 layers of the wet mix and the dry mix, and
   wherein the coated product exhibits no visible leakage during the heating step.
16. The method of para 15, wherein the outer shell comprises alternating layers of the wet mix and the dry mix.
17. The method of para 15, wherein the dry mix further comprises at least one of cocoa powder and baking soda.
18. The method of para 15, wherein the outer shell has a thickness between 0.8 to 4 mm.
19. The method of para 15, wherein the chocolate composition comprises a chocolate or compound chocolate.
20. The method of para 15, wherein the heating step comprises exposing the coated product to a temperature between 175 to 200°C for 2 to 20 minutes.

## Claims

1. A chocolate composition product comprising:
an outer shell comprising a legume flour and a hydrophilic binding agent, and
an inner portion comprising a chocolate composition,
wherein the outer shell surrounds the inner portion,
wherein the product is a ready-to-eat food,
wherein an average moisture content of the outer shell is between 0.1% and 5%.

2. The product of claim 1, wherein the legume flour is a flour of chickpea, peanut, soybean, green pea, yellow pea, black eyed peas, pinto bean, kidney bean, black bean, mung bean, adzuki, fava, green lentil, red lentil, black lentil or combinations thereof.

3. The product of claim 1, wherein the legume flour is a flour of chickpea.

4. The product of claim 1, wherein the binding agent comprises pregelatinized starch, molasses, jaggery, rice syrup, brown rice syrup, corn syrup, alginates, agar, guar gum, locust bean, carrageenan, gum arabic, tragacanth, pectin, xanthan, gellan, maltodextrin, galactomannan, pullulan, laminarin, scleroglucan, gum arabic, inulin, pectin, chitin, cyclodextrin, chitosan, polyvinyl pyrrolidone, methylcellulose, hydroxypropylcellulose, hydroxypropylmethylcellulose, or a mixture thereof

5. The product of claim 1, wherein the outer shell is formed from multiple layers, comprising:
a first layer comprising a wet mix comprising the hydrophilic binding agent and water, and
a second layer comprising a dry mix comprising the legume flour, starch and baking soda.

6. The product of claim 1, wherein the wet mix comprises soluble fibers.

7. The product of claim 1, wherein the outer shell comprises 5 wt% to 50 wt% starch, optionally 10 wt% to 30 wt% starch.

8. The product of claim 1, wherein the outer shell comprises 0.5 wt% to 5% baking soda, optionally 1 wt% to 3wt% baking soda.

9. The product of claim 1, wherein the outer shell further comprises at least one of a cinnamon flavoring, a vanilla flavoring or a cocoa flavoring.

10. The product of claim 1, wherein the outer shell comprises between 30 % and 60% and the inner portion comprises between 40% and 70%, based on the total weight of the product.

11. The product of claim 1, wherein the chocolate composition comprises chocolate or a compound chocolate.

12. The product of claim 1, wherein the outer shell has a thickness between 0.8 to 4 mm.

13. The chocolate composition product of claim 1, wherein, when the chocolate composition product is tested by exposing the product to 37 °C for 3 minutes, the chocolate composition product exhibits substantially no visible leakage.

14. The product of claim 1, wherein the product is heat tolerant as measured by detecting no leakage when the product is exposed to a temperature of 37°C for 3 minutes.

15. A method for producing a coated chocolate composition product comprising a chocolate composition and an outer shell, the method comprising:
combining a legume flour and a starch to form a dry mix,
combining a hydrophilic binding agent and water to form a wet mix,
coating the chocolate composition with the wet mix to form a first layer, coating the first layer with the dry mix to form a second layer,
repeating the first layer coating step and the second layer coating step to form the outer shell on the chocolate composition to form a coated product, and
heating the coated product to reduce moisture content of the outer shell and cohesively bind the applied layers,
wherein the outer shell comprises 5 to 20 alternating layers of the wet mix and the dry mix, and wherein the coated product exhibits no visible leakage during the heating step.
